# EUROPEAN PATENT APPLICATION

(11) **EP 1 211 129 A1**
(43) Date of publication of application: **05.06.2002**
(21) Application number: 01309768.8
(22) Date of filing: 20.11.2001
(51) Int. Cl.: B60N 2/427, B60N 2/66

(54) **Vehicle seat back assembly**

(30) Priority: 27.11.2000 JP 2000359066
(71) Applicant: Johnson Controls Automotive Systems Corporation, Ayase-shi, Kanagawa-ken (JP)
(72) Inventor: Watanabe, Yoshio, 771, Kozono, Ayase-shi, Kanagawa-ken (JP)
(74) Representative: Dealtry, Brian

(57) **Abstract**

A vehicle seat back assembly is provided with: a seat back frame (2) having an upper frame component (2a) and a lower frame component (2c); a movable support member (7) supported with the upper frame component for tilting movement in forward and rearward directions relative to the seat back frame and vertical movement relative to the seat back frame; an actuation member (4) supported with a lower section of the movable support member and moveable rearward in response to impact force exerted by a seat occupant relatively to the seat back frame; a first support member (5) coupled to the lower frame component of the seat back frame; a second support member (6) coupled to the movable support member; a head rest (3) supported with an upper section of the movable support member; and a lumbar support member (8) having an upper end portion coupled to the second support member and a lower end portion coupled to the first support member to take on a position to resiliently support a lumbar of the seat occupant. The first support member and the second support member support the upper end portion and the lower end portion of the lumbar support member to allow the upper end portion and the lower end portion of the lumbar support member to be tilted in forward and rearward directions relatively to the seat back frame and vertically moved relatively to the seat back frame.

## Description

### BACKGROUND OF THE INVENTION

The present invention relates to a seat back assembly for a vehicle and, more particularly, to a vehicle seat back assembly which protects a neck of a seat occupant such as a cervical vertebra during a vehicle collision and to urge and support a lumbar of the seat occupant during a normal driving phase of the vehicle.

In the related art technology, it has been proposed to provide a vehicle seat back assembly as disclosed in International Publication No. WO 98/09838. In the International Publication, the seat back assembly is constructed of a rectangular seat back frame, a support means supported with an upper end portion of the seat back frame for fore and aft tilting movement and for vertical movement, a head rest supported with an upper end portion of the support means by means of a head rest holder mounted to stays, and an actuation member supported with a lower end portion of the support means and moveable only in response to an impact force imposed by a back of an seat occupant.

With such a structure, for example, the seat back encounters an impact load applied in a forward direction to cause the seat occupant to rapidly move forward during a collision of the vehicle. Subsequently, the seat occupant undergoes a reaction force to rapidly move rearward, resulting in a reactive load imposed on the seat back assembly rearward. This is referred to as a secondary collision. Thus, a back element, which extends between frame components of the seat back frame, and the actuation member are exerted with such an impact load. When this occurs, rearward movement of the actuation member causes the upper end portion of the support means to tilt forward about a pivotal point of an upper periphery of the seat back frame and to move upward such that the head rest supported with the upper end portion of the support means is actuated to be closer to the head of the seat occupant.

As a consequence, during the collision of the vehicle, even when the seat back is flexed rearward due to the reactive load imposed by the seat occupant, the head rest is instantaneously moved closer to the neck of the seat occupant. When this takes place, the neck of the seat occupant is reliably received with the head rest, enhancing a desired protection for the neck of the seat occupant.

### SUMMARY OF THE INVENTION

In such a related art technology, the specific feature of the seat back assembly only suffices a particular need for obtaining protection during the vehicle collision that would occur at infrequent timings. However, such a specific structure is not pertinent for providing comfortable seat surroundings during a major part of the driving conditions of the vehicle. More particularly, because the lumbar support member, which serves to support the lumbar of the seat occupant in the major driving condition of the vehicle, should be located in a narrow spacing within the seat back frame, either one of or both of the lumbar support member and the actuation member are rendered to be too small in size with a resultant degradation in adequately comfortable support for the lumbar of the seat occupant. Another issue is encountered in that when the seat occupant leans back to the seat back in daily times, the load imposed by the seat occupant is transmitted to the associated parts to cause the head rest to move in an undesired direction.

The present invention has been made with the above view and has an object to provide a vehicle seat back assembly which provides three satisfactions involving a first object for a neck of a seat occupant such as a cervical vertebra during a vehicle collision, a second object for supporting a lumbar of the seat occupant in a daily driving condition, and a third object for interrupting undesired movement of a head rest caused by daily leaning back movement of the seat occupant.

According to an aspect of the present invention, there is provided a vehicle seat back assembly comprising: a seat back frame (2) having an upper frame component (2a) and a lower frame component (2c); a movable support member (7) supported with the upper frame component for tilting movement in forward and rearward directions relative to the seat back frame and vertical movement relative to the seat back frame; an actuation member (4) supported with a lower section of the movable support member and moveable rearward in response to impact force exerted by a seat occupant relatively to the seat back frame; a first support member (5) coupled to the lower frame component of the seat back frame; a second support member (6) coupled to the movable support member; a head rest (3) supported with an upper section of the movable support member; and a lumbar support member (8) having an upper end portion coupled to the second support member and a lower end portion coupled to the first support member to take on a position to resiliently support a lumbar of the seat occupant. The first support member and the second support member support the upper end portion and the lower end portion of the lumbar support member to allow the upper end portion and the lower end portion of the lumbar support member to be tilted in forward and rearward directions relatively to the seat back frame and vertically moved relatively to the seat back frame.

Other and further features, advantages, and benefits of the present invention will become more apparent from the following description taken in conjunction with the following drawings.

### BRIEF DESCRIPTION OF THE DRAWINGS

FIG. 1 is a cross sectional view of a vehicle seat back assembly of a preferred embodiment according to the present invention;
FIG. 2 is cross sectional view of the vehicle seat back assembly shown in FIG. 1, with an actuation member remaining in an operated state to allow a head rest to support a neck of a seat occupant;
FIG. 3 is an enlarged cross sectional view of essential component parts of the vehicle seat back assembly shown in FIG. 2;
FIG. 4 is a perspective view of a seat back frame of the vehicle seat back assembly shown in FIG. 1;
FIG. 5 is a front view of the seat back frame shown in FIG. 4;
FIG. 6 is a vertical cross sectional view illustrating the relationship between a lumbar support member and a second support member shown in FIG. 5;
FIG. 7 is a perspective view illustrating a structure of the lumbar support member, as viewed at a front side thereof, shown in FIG. 5; and
FIG. 8 is a perspective view illustrating a structure of the lumbar support member, as viewed at a rear side thereof, shown in FIG. 7.

### DETAILED DESCRIPTION OF THE PREFERRED EMBODIMENT

To describe the present invention more in detail, a vehicle seat back assembly of a preferred embodiment of the present invention will be explained below with reference to the accompanied drawings wherein symbols FR, PR, UP and LWR refer to "forward", "rearward", "upper" and "lower" in a vehicle, respectively.

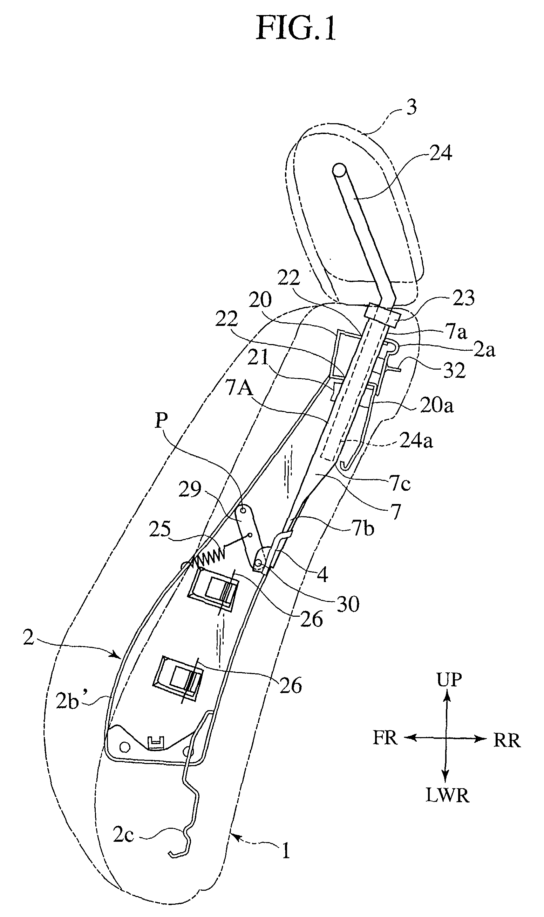

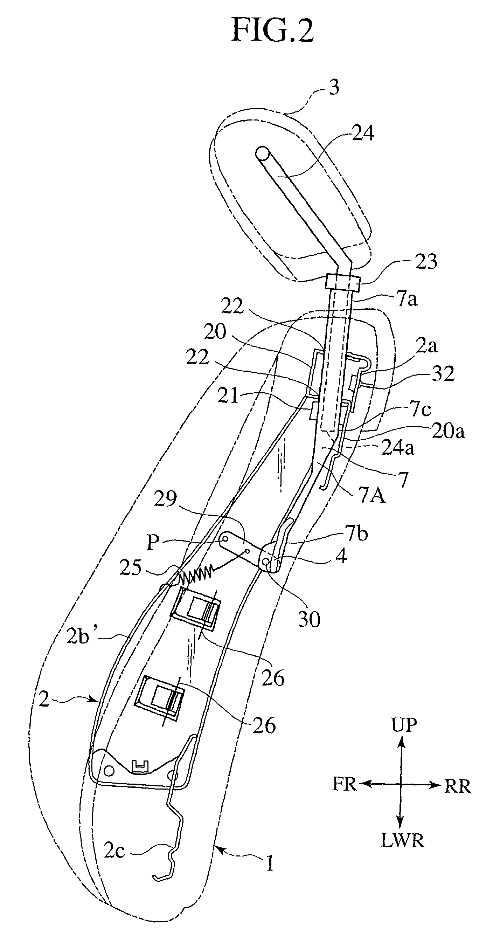

Referring to FIGS. 1 to 8, there is shown a vehicle seat back assembly 1 of the present embodiment according to the present invention. The vehicle seat back assembly 1 is constructed of a seat back frame 2 made of steel plate and composed of a pair of side frame components 2b, 2b' which are laterally spaced from one another and substantially stand upright, an upper frame component 2a connected to upper distal ends of the side frame components 2b, 2b'and a lower frame component 2c connected to lower distal ends of the side frame components 2b, 2b'. The vehicle seat back assembly 1 is also constructed of a movable support member 7 composed of a pair of armature pipes 7A, 7A which are supported with the upper frame component 2a for fore and aft tilting movement and for upward and downward movement, a head rest 3 supported with upper end portions 7a, 7a of the armature pipes 7A, 7A, respectively, an actuation member 4 supported with lower end portions 7b, 7b of the armature pipes 7A, 7A and moveable only upon receipt of impact force exerted from a back of a seat occupant which is not shown, a lumbar support member 8 supported with the seat back frame 2 and the movable support member 7 through the actuation member 4, a pad (not shown) which is formed by use of polyurethane foam and is covered over front and rear facing surfaces of the seat back frame 2, and a decorative fabric skin layer (not shown) covered over the pad.

A first support member 5, which is composed of a wire, is fixedly secured to the lower frame component 2c of the seat back frame 2 by a bolt 31. A second support member 6, which is composed of a wire, is fixedly secured to an intermediate portion 7c of the armature pipe 7 by a bolt 31.

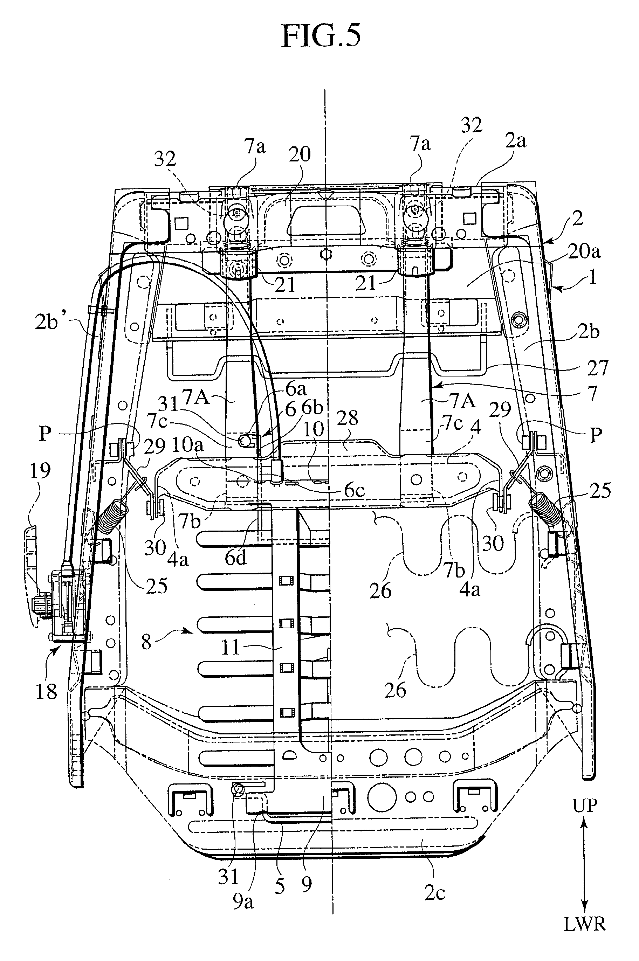

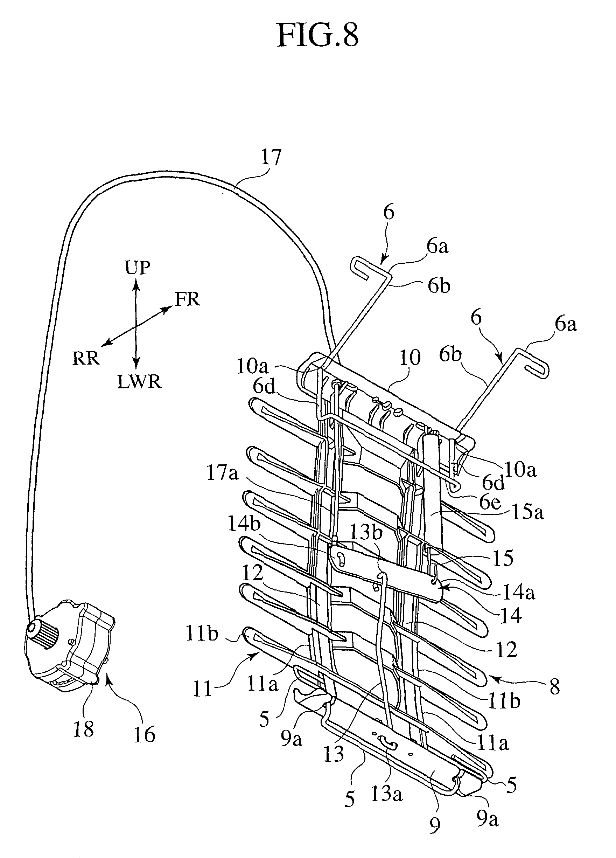

As best seen in FIGS. 5 and 8, the lumbar support member 8 is made of a unitary structure which includes a lower end portion 9, which is formed with cutouts 9a with which the first support member 5 engages to allow the lower end portion 9 to tilt forward FR and rearward RR, an upper end portion 10 which is formed with cutouts 10a with which the second support member 6 engages to allow the upper end portion 10 to tilt forward FR and rearward RR and to move upward UP and downward LWR, and a body section 11 which is movable forward FR so as to protrude for resiliently supporting a lumbar of the seat occupant (not shown).

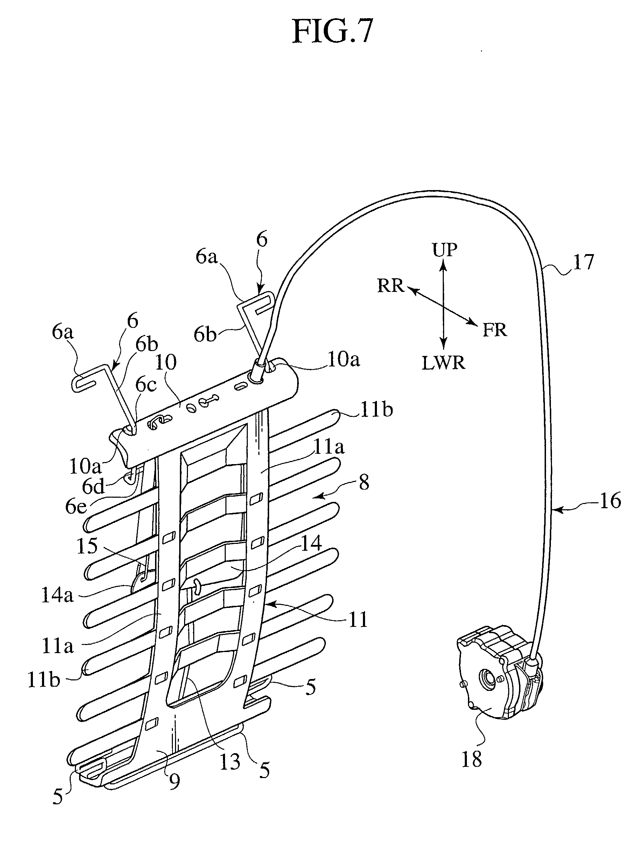

As best shown in FIGS. 7 and 8, the body section 11 includes a pair of first laterally spaced, vertically elongated flat members 11a, 11a and a plurality of second vertically spaced rib members 11b which laterally extend outward from the first flat members 11a, 11a at six positions, respectively. As viewed in FIG. 8, each of the first flat members 11a, 11a has at its rear side a leaf-spring shaped, first urging member 12 which urges the body section 11 in a direction to restore in a substantially flat state from the protruding position of the body section 11.

As best seen in FIG. 8, a center wire 13 is located at a rear side of the lumbar support member 8 and has a lower end 13a engaging the lower end portion 9a of the lumbar support member 8 and an upper end 13b fixedly secured to a central portion of a laterally extending yoke bar 14 to allow its rocking movement. One distal end 14a of the yoke bar 14 is connected to the upper end portion 10 of the lumbar support member 8 by means of a coil-spring shaped, second urging member 15 such that the one distal end 14a is urged upward UP at all times. That is, the second urging member 15 remains in a contracting state at all times. Other distal end 14b of the yoke bar 14 is interconnected with an inner cable 17a of a cable 17 extending from an operation unit 16 such that actuation of the operation unit 16 enables the body section 11 of the lumbar support member 8 to move frontward FR against the forces of the first and second urging members 12, 15. Reference numeral 15a refers to a sleeve shaped cover which conceals the second urging member 15.

As clearly seen in FIG. 5, the operation unit 16 includes a retractor 18 fixedly mounted to the side frame component 2' of the seat back frame 2 for winding the inner cable 17a of the cable 17, and a manually operated actuation lever 19 for actuating the retractor 18 either in a winding direction or in a winding-release direction. Operating the actuation lever 19 in the winding direction causes the retractor 18 to wind the inner cable 17a of the cable 17 to thereby lift up the other end 14b of the yoke member 14. As the other end 14b of the yoke bar 14 is lifted up, the yoke bar 14 rotates substantially about the one end 14a of the yoke bar 14 as a rotational center to allow the center wire 13 to be lifted up. When this occurs, a distance between the upper end portion 10 and the lower end portion 9 is shortened, causing a central area of the body section 11 to move forward FR in a position to suitable support the lumbar of the seat occupant. Although the yoke bar 14 is moved to its extreme stop position where the inner cable 17a is fully wound up in the retractor 18 and can be stopped in a position corresponding to the extreme stop position of the inner cable 17a, the yoke bar 14 per se has various angularly adjusted positions maintained in a balanced state between an expanding and contracting conditions of the second urging member 15.

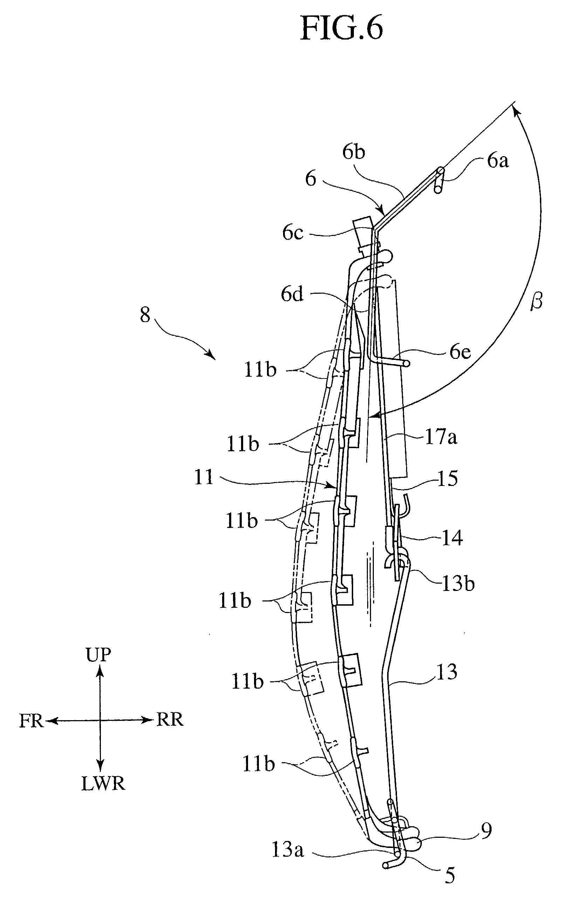

As clearly seen in FIGS. 6 to 8, the second support member 6 includes a pair of retainer segments 6a, 6a which are retained with the intermediate portions 7c, 7c of the armature pipes 7, 7, respectively, a pair of slanted segments 6b, 6b extending downward from respective inner distal ends of the retainer segments 6a, 6a in a spaced relationship with respect to one another, a pair of lower vertical segments 6d, 6d extending downward from respective lower distal ends 6c, 6c of the slanted segments 6b, 6b for vertical sliding movement with respect to the lumbar support member 8, and a laterally extending stopper segment 6e integrally formed with respective distal ends of the vertical segments 6d, 6d for precluding the upper end portion 10 from being separated from the lumbar support member 8. Preferably, each of the slanted segments 6b, 6b is oriented at an angle β of 134.6 degrees relative to the vertical segment 6d.

With such a structure of the second support member 6, each of the vertical segments 6d, 6d is vertically spaced from the retainer segment 6a at which the second support member 6 is retained.

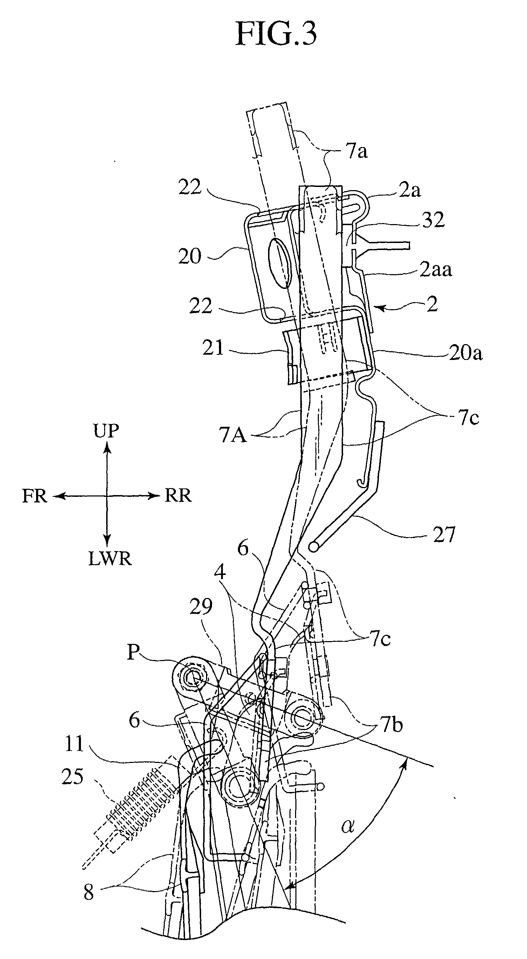

As previously noted above, the seat back frame 2 includes the upper frame component 2a which is located at an upper extreme end and extends in a substantially transverse direction, the pair of laterally spaced, elongated upright side frame components 2b, 2b' extending at both ends of the upper frame component 2a, and the lower frame component 2c extending between the lower distal ends of the side frame components 2b, 2b' in the substantially transverse direction, with all the frame components being mutually welded together to provide a rigid structure. As seen in FIGS. 3 and 5, the upper frame component 2a has a downwardly extending rear wall 2aa which retains stopper rubbers 32 that are held in resilient contact with the armature pipes 7A, 7A, respectively.

As shown in FIGS. 1 to 3, a retaining plate 20 is constructed at a front side FR of the upper frame component 2a, with a substantially hollow, channel shaped cross section, which is welded to the upper frame component 2a and the rear wall 2aa. The retaining plate 20 has a lower wall whose rear end has a downwardly extending rear wall segment 20a which is secured to a lower end of the rear wall 2aa of the upper frame component 2a to allow armature holders 21, 21 to be fixedly secured to the rear wall segment 20a at a position below the lower wall of the retaining plate 20 by welding. The armature holders 21, 21 support the armature pipes 7A, 7A for tilting movement and vertical movement, respectively. As viewed in FIGS. 1 to 4, the upper frame components 2a has laterally spaced elongated slots 22, 22 elongated in a fore and aft direction and formed at the upper and lower walls in vertically aligned relationships. Head rest holders 23, 23 are made of plastic resin and fitted to the respective upper distal ends 7a, 7a of the armature pipes 7A, 7A, respectively, to allow stays 24, 24 of a head rest 3 to be received in vertical movement to be fixedly retained at a suitable position.

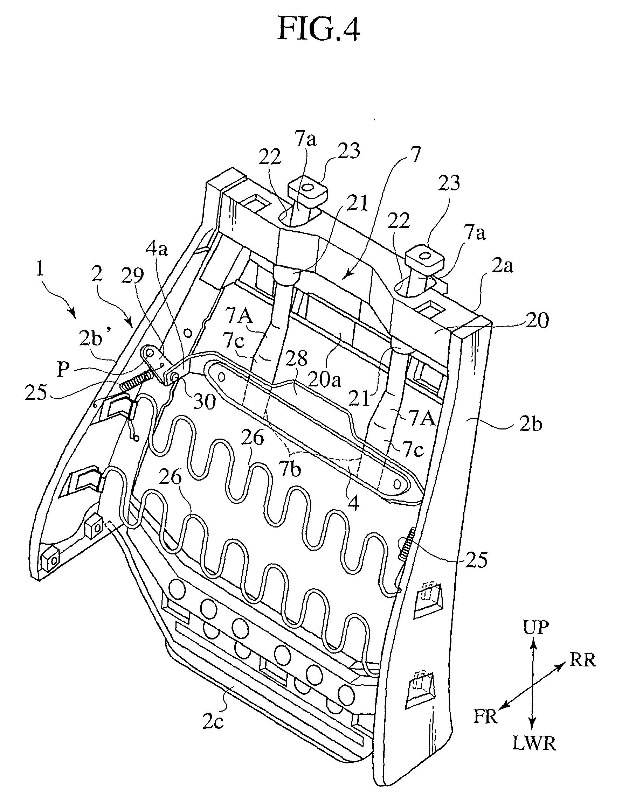

As shown in FIGS. 4 and 5, the actuation member 4 is formed in a laterally extending elongated rigid structure made of steel plate and has an upper end formed with an inclined section 28 extending between the armature pipes 7A, 7A and oriented rearward RR. Further, both ends of the actuation member 4 have forwardly bent flanges 4a, 4a, which are pivotally connected to one distal ends of actuating links 29, 29 by means of bolts 30, 30, respectively. Other distal ends of the actuating links 29, 29 are pivotally supported with the side frame components 2b, 2b' by means of bolts P, P, respectively. A pair of coil springs 25, 25 have one ends hooked to respective forward ends of the side frame components 2b, 2b' and the other ends connected to respective intermediate portions of the actuating links 29, 29 to urge the actuation member 4 in the forward direction FR at all times. The coil springs 25, 25 serve as a third urging member. A fourth urging member is composed of a pair of laterally located S-shaped springs 26, 26 which are suspended between the side frame components 2b, 2b' in a vertically spaced relationship. As viewed in FIGS. 3 and 5, a C-shaped stopper wire 27 has upright ends fixedly secured to a lower end portion of the rear wall segment 20a of the retaining plate 20 to prevent excessive rotating movements of the armature pipes 7A, 7A.

In a frontal view shown in FIG. 5, the armature pipes 7A, 7A stand upright in a laterally spaced relationship and are supported at least inside a shoulder points of AF05 percentile mannequin (SAE). Supporting the armature pipes 7A, 7A inside the shoulder points of AF05 percentile mannequin (SAE) renders the armature pipes 7A, 7A to be located inside the shoulder points of physical constitutions of most of adults. Thus, even when the seat occupant is exerted with load from the front side FR of the seat back frame 2 due to collision of the vehicle, it is possible for the shoulders of the seat occupant from interfering with the armature pipes 7A, 7A.

As seen in FIG. 1, the intermediate portion 7c of each armature pipe 7A is slightly bent. The bent portions 7c are shaped at points where they do not interfere with lower end portions 24a, 24a of the stays 24, 24, with an internal surface of each bent portion 7c having a curved surface with a radius of 20 mm.

Now, the operation of the vehicle seat back assembly 1 is described below in detail.

As shown in FIG. 1, under a normal state wherein the seat occupant (not shown) sits on a seat cushion (not shown) with his back leaning against the seat back assembly 1, there is a slight amount of gap between the head of the seat occupant and the head rest 3 and also there exists a little gap between the back of the seat occupant and the actuation member 4. Even though the pad and the skin layer are intervened between the back of the seat occupant and the actuation member 4, the load from the seat occupant is not exerted onto the actuation member 4. Since, also, the lumbar support member 8 is supported with the armature pipes 7A, 7A via the second support member 6 and the slanted segments 6b, 6b of the second support member 6 remain in a flexible state, applying load to the lumbar support member 8 allows the slanted segments 6b, 6b of the second support member 6 to be deflected to preclude the movements of the armature pipes 7A, 7A. When this takes place, the head rest 3 remains unchanged in the fore and aft direction.

The presence of the first and second support members 5 and 6 made of wires, respectively, enables the first and second support members 5 and 6 for smooth rotations or movements, respectively, so as to allow the lumbar support member 8 to be deformed, even when the lumbar support member 8 is deformed to protrude or is caused to restore its original substantially flat position.

Further, since the lumbar support member 8 is supported with the vertical segments 6d, 6d of the second support member 6 at the position separated from the retainer segments 6a, 6a, the load imposed by the seat occupant leaning back in the seat back assembly 1 causes the slanted segments 6b, 6b of the second support member 6 to be flexed to preclude the load from being imposed on the armature pipes 7A, 7A, thereby maintaining the head rest 3 in its original condition. Under the same situation, further, the lumbar of the seat occupant is retainable with the lumbar support member 8.

More specifically, due to provision of the second support member 6 constructed of the retainer segments 6a, 6a which provide the support positions for the armature pipes 7A, 7A, the slanted segments 6b, 6b which extend from the retainer segments 6a, 6a obliquely downward and vertical segments 6d, 6d which vertically extend downward from the slanted segments 6b, 6b enabling vertical sliding movement for the lumbar support member 8, the load imposed by the seat occupant leaning back in the seat back assembly 1 causes the slanted segments 6b, 6b of the second support member 6 to be flexed to prevent the load from being imposed on the armature pipes 7A, 7A for retaining the head rest 3 in its initial position. Further, during a secondary collision, since the vertical segments 6d, 6d of the second support member 6 vertically slide relative to the lumbar support member 8, the armature pipes 7A, 7A are enabled to move in a smooth manner. In other words, there are no limits for the movement of the armature pipes 7A, 7A.

Under the state described above, during collision of the vehicle, as the seat occupant is urged rearward RR due to the secondary collision to cause the pad to be displaced rearward RR, the actuation member 4 is urged with the back of the seat occupant via the pad and is moved rearward RR as the actuating links 29, 29 rotate about the centers of the bolts P, P with an angle α. Even when the pad is moved rearward RR owing to the load imposed by the seat occupant leaning back in the seat back assembly 1, since the shoulder points of the seat occupant remain at least inside the shoulder points of AF05 percentile mannequin (SAE), there are no instances where the pad is squeezed into a space between the armature pipes 7A, 7A. For this reason, the upward movements of the armature pipes 7A, 7A due to their rotational movements are not interrupted, thereby ensuring an adequate amount of movement of the head rest 3.

That is, as the actuating links 29, 29 rotate upward UP and rearward RR, the lower end portions 7b, 7b of the armature pipes 7A, 7A, i.e., the actuation member 4 is moved upward UP and rearward RR. As the actuation member 4 moves, the upper end portions 7a, 7a of the armature pipes 7A, 7A and the head rest holders 23, 23 are moved upward UP and forward FR. Due to upward movements of the head rest holders 23, 23, the stays 24, 24 of the head rest 3 are also moved upward UP and forward FR. At this point, since the upper end portions 7a, 7a of the armature pipes 7A, 7A are located in the hollow box defined by the retainer plate 20 and the upper frame component 2a, the load caused by the seat occupant during the second collision is not exerted onto the upper end portions 7a, 7a of the armature pipes 7A, 7A to retain the movement of the upper end portions 7a, 7a of the armature members 7A, 7A, i.e., the movement of the upper end portions 7a, 7a is not interfered.

As previously described, since both the armature pipes 7A, 7A and the stays 24, 24 move about the centers of the armature holders 21, 21, the head rest 3 supported with the stays 24, 24 is brought into abutting contact with the head of the seat occupant to support the head of the seat occupant in place. Thus, when the upper half of the seat occupant is moved rearward RR, the head of the seat occupant is reliably retained with the head rest 3 after its movement. When this occurs, the inclined section 28 formed in an upper area of the actuation member 4 and oriented rearward RR is enabled to move along the rear surface of the pad. In other words, it is difficult for the actuation member 4 to be squeezed into the pad.

Under this condition, since the rear surfaces of the respective armature pipes 7A, 7A is bent in a "L" shape configuration relative to the actuation member 4, when the actuation member 4 is moved rearward RR, the actuation member 4 does not protrude rearward RR as shown in FIG. 3, ensuring a sufficient space for a seat occupant in a rear seat.

Incidentally, since the stays 24, 24 of the head rest 3 are supported with the head rest holders 23, 23 for vertical sliding movements, it is possible for the head rest 3 to be suitably matched to various heights of the heads of the seat occupants with different physical constitutions.

In such a vehicle seat back assembly 1 of the present embodiment, since the third urging member 25 for urging the actuation member 4 forward FR is supported between the actuating links 29 and the side frame components 2b, 2b' of the seat back frame 2, the actuation member 4 located in the forward FR direction by the action of the third urging member 25 under a condition where the load imposed by the back of the seat occupant is not applied rearward RR. That is, the head rest 3 supported with the upper end portions 7a, 7a of the armature pipes 7A, 7A supporting at their lower ends the actuation member 4 is accommodated in the rearward RR position owing to a seesaw action without sacrificing the seat occupant's comfortable sitting property.

Further, together with such a structure, the lumbar support member 8 which includes the body section 11, which is capable of protruding forward so as to resiliently support the lumbar of the seat occupant and which is formed in the unitary structure with the lower end portion 9 with which the first supporting member 5 engages and the upper end portion 10 with which the second supporting member 6 engages, and the first urging member 12 for urging the body section 11 in the direction to restore its original position from its protruded position. The yoke bar 14 is connected to the lower end portion 9 of the lumbar support member 8 for tilting movement. The yoke bar 14 has the one distal end 14a which is urged upward UP at all times by the action of the second urging member 15, and the other distal end 14b which is connected to the operation unit 16 such that operation of the operation unit 16 allows the body section 11 of the lumbar support member 8 to protrude forward FR against the forces of the first and second urging members 12, 15. Thus, actuating the operation unit 16 in the direction to cause forward protruding movement of the body section 11 enables the forward movement of the body section 11 in an adjusted position to suitably support the lumbar of the seat occupant against the forces of the first and second urging members 12, 15. In contrast, actuating the operation unit 16 in another direction to interrupt the forward movement of the body section 11 enables the body section 11 to move to the position not to support the lumbar of the seat occupant by the actions of the first and second urging members 12, 15.

While, in the above discussion related to the operation of the vehicle seat back assembly 1, it is described that the head of the seat occupant is reliably supported by the head rest 3 which is moved, since the head rest 3 and the seat back assembly 1 are moved relative to one another, this expression may involve a situation wherein even when the seat back assembly 1 is moved rearward RR with the back of the seat occupant, the head rest 3 remains unchanged with respect to the head of the seat occupant and, under such a position, the head of the seat occupant is located in a protective position.

The entire content of a Patent Application No. TOKUGAN 2000-359066 with a filing date of November 27, 2000 in Japan is hereby incorporated by reference.

Although the invention has been described above by reference to a certain embodiment of the invention, the invention is not limited to the embodiment described above. Modifications and variations of the embodiment described above will occur to those skilled in the art, in light of the teachings. The scope of the invention is defined with reference to the following claims.

## Claims

1. A vehicle seat back assembly comprising:
a seat back frame (2) having an upper frame component (2a) and a lower frame component (2c);
a movable support member (7) supported with the upper frame component for tilting movement in forward and rearward directions relative to the seat back frame and vertical movement relative to the seat back frame;
an actuation member (4) supported with a lower section of the movable support member and moveable rearward in response to impact force exerted by a seat occupant relatively to the seat back frame;
a first support member (5) coupled to the lower frame component of the seat back frame;
a second support member (6) coupled to the movable support member;
a head rest (3) supported with an upper section of the movable support member; and
a lumbar support member (8) having an upper end portion coupled to the second support member and a lower end portion coupled to the first support member to take on a position to resiliently support a lumbar of the seat occupant,
wherein the first support member and the second support member support the upper end portion and the lower end portion of the lumbar support member to allow the upper end portion and the lower end portion of the lumbar support member to be tilted in forward and rearward directions relatively to the seat back frame and vertically moved relatively to the seat back frame.

2. A vehicle seat back assembly according to claim 1, wherein the second support member (6) includes vertical segments (6d, 6d) which support the upper end portion of the lumbar support member (8) for vertical sliding movement.

3. A vehicle seat back assembly according to claim 1 or 2, wherein the lumbar support member (8) is a unitary structure having a body section (11) provided with first urging members (12, 12) vertically extending between the upper end portion and the lower end portion of the lumbar support member (8) in a laterally spaced relationship to take on a position to protrude forward so as to resiliently urge and support the lumbar of the seat occupant.

4. A vehicle seat back assembly according to claim 3, further comprising:
a yoke bar (14) operatively supported by the unitary structure;
a second urging member (15) coupled to the yoke bar for urging the yoke bar; and
an operation section (16) interconnected with the yoke bar for actuating the yoke bar to allow the body section to protrude forward against the force of the second urging member.

5. A vehicle seat back assembly according to claim 1 or 2, wherein the first support member (5) and the second support members (6) are made of wire members, respectively.

6. A vehicle seat back assembly according to claim 1 or 2, wherein the seat back frame (2) further includes a pair of upright side frame components (2b, 2b') laterally spaced to each other and integrally connected to the upper frame component (2a) and the lower frame component (2c),

7. A vehicle seat back assembly according to claim 6, wherein the upper frame component (2a) includes a retainer member (20) having elongated slots (22, 22) to enable the tilting movement and the vertical movement of the movable support member (7).

8. A vehicle seat back assembly according to claim 7, wherein the movable support member (7) includes a pair of armature pipes (7A, 7A) vertically extending in a laterally spaced relationship and having upper distal ends (7a, 7a) received in the elongated slots (22,22) of the retainer member (20), respectively,
and wherein the actuation member (4) is operatively supported with the pair of upright side frame components (2b,2b') for moving lower distal ends (7b,7b) of the pair of armature pipes.

9. A vehicle seat back assembly according to claim 8, further comprising:
a pair of actuating links (29, 29) pivotally supported with the side frame components (2b,2b'), respectively, and pivotally connected to the actuation member (4) for allowing movement of the actuation member; and
third urging members (25, 25) urging the actuating links, respectively, to cause the actuation member and the lower distal ends (7b,7b) of the pair of armature pipes (7A, 7A) to remain in respective initial positions.
